# EUROPÄISCHE PATENTSCHRIFT

(11) **EP 4 157 764 B1**
(45) Veröffentlichungstag und Bekanntmachung des Hinweises auf die Patenterteilung: **18.10.2023**
(21) Anmeldenummer: 21814722.1
(22) Anmeldetag: 11.11.2021
(51) Int. Cl.: B65G 45/16

(54) **ABSTREIFER MIT EINFACH WECHSELBAREM ABSTREIFERELEMENT**
SCRAPER WITH AN EASILY REPLACEABLE SCRAPER ELEMENT
RACLOIR DOTÉ D'UN ÉLÉMENT RACLOIR FACILEMENT REMPLAÇABLE

(30) Priorität: 27.11.2020 DE 102020131558; 27.11.2020 DE 102020131557
(43) Veröffentlichungstag der Anmeldung: 05.04.2023
(73) Patentinhaber: Kill-Frech, Cornelia, 48329 Havixbeck (DE)
(72) Erfinder: KIEL, Martin, 45659 Recklinghausen (DE); WEIMANN, Claus, 58300 Wetter (DE); HEIDHUES, Dirk, 59510 Lippetal (DE)
(74) Vertreter: Kalkoff & Partner Patentanwälte mbB
(86) Internationale Anmeldenummer: PCT/EP2021/081412
(87) Internationale Veröffentlichungsnummer: WO 2022/112017

(56) Entgegenhaltungen:
- WO-A1-95/19310
- US-A- 4 779 716
- US-A- 5 222 588

## Beschreibung

Die Erfindung betrifft einen Abstreifer für einen Fördergurt, ein Abstreifermodul hierfür, einen damit ausgerüsteten Gurtbandförderer sowie ein Verfahren zum Wechsel eines Abstreiferelements.

Für Fördergurte von Gurtbandförderern, die zur Förderung verschiedenster Fördergüter eingesetzt werden, ist die Verwendung von Abstreifern bekannt. Durch Anlage eines Abstreiferelements an den laufenden Fördergurt wird daran anhaftendes Fördergut abgestreift. Bekannte Abstreifersysteme weisen einen quer zur Laufrichtung des Fördergurts ausgerichteten Systemträger auf, an dem sich eine Mehrzahl von Abstreifermodulen mit Abstreiferelementen befinden.

Die DE 10 2013 006 821 A1 beschreibt ein Gurtabstreifersystem aus Modulen für den Rücklaufbereich von Förderbändern. Ein Systemträger ist quer zur Laufrichtung des Fördergurts angeordnet. Auf dem Systemträger sind mehrere Abstreifmodule nebeneinander angebracht. Die Abstreifmodule tragen jeweils eine Abstreiferlamelle, die schälend an dem Gurt anliegt.

Die WO 95/19310 beschreibt eine Vorrichtung zum Abstreifen von Verunreinigungen von Förderbändern in Förderbandanlagen. Ein Systemträger ist an einem Traggerüst für das Gurtband befestigt. Ein Abstreifelement mit einer an einer Lamellenstütze befestigten Abstreiferlamelle ist so angeordnet, dass es in betriebsbereiter Lage schälend am Gurtband anliegt. Das Abstreifelement verfügt über ein Torsionsfedergelenk, an dem die Lamellenstütze um eine horizontale Schwenkachse schwenkbar und federbelastet geführt ist, so dass sie beim Auftreffen von fest am Gurtband anhaftenden Hindernissen wegschwenken und danach wieder in die betriebsbereite Lage zurückschwenken kann. Dabei ist die Lamellenstütze mittels eines Drehlagers mit begrenztem Drehwinkel schwenkbar gelagert, so dass sich die am Gurtband anliegende Abstreiferlamelle der Kontur des Gurtbandes durch selbsttätige Drehung anpassen kann.

Die im Betrieb am Fördergurt anliegenden Abstreiferelemente unterliegen im Betrieb einem deutlichen Verschleiß und müssen regelmäßig gewechselt und ersetzt werden. Es kann als Aufgabe angesehen werden, einen Abstreifer, ein Abstreifermodul hierfür, einen Gurtbandförderer hiermit sowie ein Verfahren zum Wechseln eines Abstreiferelements an einem Abstreifer vorzuschlagen, mit denen ein einfacher Wechsel der Abstreiferelemente ermöglicht wird.

Die Aufgabe wird gelöst durch einen Abstreifer gemäß Anspruch 1, ein Abstreifermodul hierfür gemäß Anspruch 13, einen Gurtbandförderer gemäß Anspruch 14 sowie ein Verfahren gemäß Anspruch 15. Abhängige Ansprüche beziehen sich auf vorteilhafte Ausführungsformen der Erfindung.

Der erfindungsgemäße Abstreifer weist an einem Systemträger mindestens ein Abstreifermodul, bevorzugt mehrere Abstreifermodule auf. Jedes Abstreifermodul umfasst zumindest ein am Systemträger angeordnetes Basiselement und ein zur Anlage an den Fördergurt vorgesehenes Abstreiferelement. Bei dem Abstreiferelement kann es sich bspw. um einen Abstreifblock aus einem flexiblen Material handeln, insbesondere wenn der Abstreifer als Vorabstreifer, d. h. zur Anordnung im Bereich einer Umlenkung des Fördergurts vorgesehen ist. Bevorzugt kann der Abstreifer im Rücklaufbereich des Fördergurts angeordnet sein. Weiter bevorzugt verfügt das Abstreiferelement über eine Abstreifkante, besonders bevorzugt aus Metall, bspw. Hartmetall. Das Abstreiferelement kann bevorzugt schälend am Fördergurt anliegen.

Das Basiselement des Abstreifermoduls kann auf verschiedene Weise am Systemträger angebracht sein und ist bevorzugt lösbar. Besonders bevorzugt ist es mittels einer Klemmhalterung am Systemträger angebracht.

Erfindungsgemäß ist das Abstreiferelement gegenüber dem Basiselement mittels einer Drehkopplung so angebracht, dass es um eine Drehachse drehbar ist. Dabei ist die Drehkopplung so ausgebildet, dass sich abhängig von der Drehstellung des Abstreiferelements mit Bezug auf die Drehachse eine unterschiedliche Kopplung ergibt: Bei einer Drehstellung, die innerhalb eines Winkelbereiches liegt, der hier als Festwinkelbereich bezeichnet wird, ist das Abstreiferelement - bezogen auf eine Bewegung in Richtung der Drehachse - fest am Rest des Abstreifermoduls, d.h. insbesondere am Basiselement angekoppelt, während es in einer Drehstellung innerhalb eines Winkelbereiches, der hier als Freigabewinkelbereich bezeichnet wird, in Richtung der Drehachse vom Rest des Abstreifermoduls, d.h. insbesondere vom Basiselement lösbar ist.

Die Drehkopplung gewährleistet somit eine Drehbarkeit des Abstreiferelements um die Drehachse, so dass eine Ausrichtung relativ zur Gurtoberfläche möglich ist und somit im Betrieb das Abstreiferelement eine gute Anlage am Fördergurt aufweist und dabei der - bspw. leicht durchhängenden - Form des Fördergurts folgen kann.

Die Drehkopplung gewährleistet ferner im Festwinkelbereich eine - bezüglich einer Längsbewegung in Richtung der Drehachse - feste Ankopplung, d. h. in einer Drehstellung im Festwinkelbereich ist das Abstreiferelement zwar drehbar, aber nicht vom Basiselement lösbar. Bei einer Drehung des Abstreiferelements so, dass dieses eine Drehstellung innerhalb des Freigabewinkelbereichs annimmt, gibt hingegen die Drehkopplung das Abstreiferelement frei, so dass dieses - bspw. zu Service-Zwecken - lösbar, bevorzugt in Richtung der Drehachse abziehbar ist.

Dabei können der Festwinkelbereich und der Freigabewinkelbereich bevorzugt so gewählt werden, dass sich das Abstreiferelement im Betrieb, d. h. unter Anlage des Abstreiferelements am Fördergurt, stets im Festwinkelbereich befindet und ausreichend Abstand zum Freigabewinkelbereich besteht, so dass dieser im Betrieb mit hinreichender Sicherheit nicht erreicht wird, d. h. eine Verdrehung des Abstreiferelements bis in den Freigabewinkelbereich durch die Anlage am Fördergurt verhindert wird. Bspw. kann der Festwinkelbereich so gewählt sein, dass eine horizontale Ausrichtung des Abstreiferelements bzw. eine Ausrichtung des Abstreiferelements parallel zum Systemträger innerhalb des Festwinkelbereiches liegt, bevorzugt zumindest im Wesentlichen mittig. Diese Lage kann als Mittelstellung angenommen werden, wobei sich der Festwinkelbereich ausgehend von der Mittelstellung bevorzugt über zumindest +/- 30°, weiter bevorzugt über zumindest +/- 40° und besonders bevorzugt über zumindest +/- 60° erstreckt. Besonders bevorzugt beginnt der Freigabewinkelbereich somit erst bei starker Verdrehung um die Drehachse von bspw. 90° +/- 20°, so dass in allen üblicherweise zu erwartenden Betriebslagen die feste Ankopplung stets gewährleistet bleibt.

Andererseits ist das Abstreiferelement zu Wartungszwecken auf besonders einfache Weise vom Basiselement und damit vom Systemträger lösbar, in dem es einfach um die Drehachse so weit gedreht wird, bis der Freigabewinkelbereich erreicht ist. Dann kann das Abstreiferelement bevorzugt in Richtung der Drehachse abgezogen werden, ohne dass weitere Verbindungen gelöst werden müssen.

Im Ergebnis ergibt sich ein Abstreifer mit leicht wechselbarem Abstreiferelement, der mit einem sehr einfachen Aufbau realisiert werden kann. Die Drehbarkeit um die Drehachse wird dabei zweifach genutzt, nämlich einerseits zur Ausrichtung des Abstreiferelements im Betrieb und andererseits zum Lösen des Abstreiferelements, wenn dieses gewechselt werden soll. Bevorzugt kann die Drehung des Abstreiferelements dabei manuell und ohne Werkzeug erfolgen.

Zum Wechseln, d. h. bspw. Ersetzen eines verschlissenen Abstreiferelements durch ein neues Abstreiferelement reicht es aus, das alte Abstreiferelement in den Freigabewinkelbereich zu drehen (wozu ggf. zuvor notwendig sein kann, den Systemträger in eine Position zu bringen, in der das Abstreiferelement einen ausreichenden Abstand zum Fördergurt hat, um die Drehung zu ermöglichen). Dann kann das Abstreiferelement vom Basiselement gelöst und ein neues Abstreiferelement in einer Drehstellung innerhalb des Freigabewinkelbereiches positioniert am Basiselement angebracht, bspw. eingesteckt und danach zur Verriegelung in eine Drehstellung innerhalb des Festwinkelbereiches gedreht werden.

Die Drehkopplung kann auf verschiedene Weise realisiert sein, um die erfindungsgemäße Funktion zu erfüllen. Gemäß einer bevorzugten Ausführungsform weist sie ein Eingriffselement und eine Einstecköffnung hierfür auf, die so ausgebildet sind, dass das Eingriffselement in einer ersten Drehstellung, die innerhalb des Freigabewinkelbereichs liegt, durch die Einstecköffnung hindurchführbar ist, und das Eingriffselement in einer zweiten Drehstellung, die innerhalb des Festwinkelbereiches liegt, an der Einstecköffnung verriegelbar ist. Dabei kann die Einstecköffnung und ihre Berandung Teil des Basiselements oder an diesem angebracht sein und das Eingriffselement auf Seiten des Abstreiferelements vorgesehen sein oder umgekehrt.

Besonders bevorzugt kann das Eingriffselement an einem Schaft angeordnet sein, der in eine Einsteckhülse einsteckbar ist, wobei die Einstecköffnung innerhalb der Einsteckhülse gebildet ist. Eine Berandung der Einstecköffnung kann nach innen in die Einsteckhülse vorstehend ausgebildet sein. Bevorzugt ist dabei der Schaft mit dem Abstreifelement verbunden, bspw. fest und unbeweglich gegenüber diesem angebracht, während die Einsteckhülse am Basiselement befestigt ist. Die Drehbarkeit des Abstreiferelements wird bevorzugt durch eine Drehbarkeit des Schaftes innerhalb der Einsteckhülse gewährleistet. Dabei kann sich bevorzugt der Schaft und/oder die Einsteckhülse und besonders bevorzugt auch die Drehachse zumindest im Wesentlichen rechtwinklig zu einer Abstreifkante des Abstreiferelements erstrecken, oder zumindest unter einem Winkel δ von mehr als 45°, bevorzugt 60° oder größer.

Bevorzugt ist die Drehachse auch zumindest im Wesentlichen rechtwinklig relativ zum Systemträger angeordnet, oder zumindest unter einem Winkel β von mehr als 60°. Somit erstreckt sich die Drehachse von oben bzw. von unten gesehen bevorzugt mindestens im Wesentlichen parallel zur Laufrichtung des Fördergurts. Von der Seite, d.h. horizontal und quer zur Laufrichtung des Fördergurts betrachtet, kann die Drehachse in bevorzugten Ausführungen mit der Laufrichtung des Fördergurts einen relativ kleinen Winkel γ von bspw. 0 - 35° einschließen. Es sind aber auch alternative vorteilhafte Ausführungen denkbar, bei denen die Drehachse gegenüber der Laufrichtung des Fördergurts wesentlich steiler angestellt ist, d.h. unter größeren Winkeln γ.

Die Drehung des Abstreiferelements um die Drehachse ist gemäß einer bevorzugten Ausführungsform leicht gedämpft bzw. mit einer gezielten Schwergängigkeit ausgestattet, so dass keine freie Drehung bei Einwirkung bspw. nur von Gravitationskräften auf das Abstreiferelement erfolgt. Hingegen ist die Drehkopplung so leichtgängig, dass bei der Einwirkung von Kräften, wie sie durch Anlage des Abstreiferelements an den Fördergurt entstehen, eine freie Drehung und Ausrichtung des Abstreiferelements ermöglicht ist. Durch die gezielte Dämpfung bzw. Schwergängigkeit wird die Installation des Abstreiferelements erleichtert, weil es so möglich ist, eine gewünschte Ausrichtung des Abstreiferelements bspw. durch manuelle Drehung vorzugeben, ohne dass sich diese unerwünscht ändert. Bei der bevorzugten Ausbildung der Drehkopplung mit einem Schaft, der in eine Einsteckhülse einsteckbar ist, kann eine Dämpfung bspw. erfolgen mittels eines Reibelement, das zur Anlage an den Schaft und/oder eine Innenseite der Einsteckhülse vorgesehen ist, um eine Relativbewegung - insbesondere Drehung - zwischen Schaft und Einsteckhülse zu dämpfen.

Weiter kann im bevorzugten Fall der Ausbildung der Drehkopplung mit einem Schaft und einer Einsteckhülse bevorzugt ein Dichtungselement zur Abdichtung zwischen dem Schaft und einer Innenseite der Einsteckhülse vorgesehen sein, um das Eindringen von Verunreinigungen zu vermeiden. Das Dichtungselement kann bevorzugt den Schaft vollständig umgreifen, bspw. als O-Ring. Insbesondere ist das Dichtungselement auch nutzbar, um die gewünschte Dämpfung der Relativbewegung zwischen Schaft und Einsteckhülse zu erreichen.

Gemäß einer Weiterbildung der Erfindung kann das Abstreifermodul ein Gelenk aufweisen, mittels dessen das Abstreiferelement gegenüber dem Systemträger schwenkbar ist. Bevorzugt kann eine Schwenkachse des Gelenks zumindest im Wesentlichen parallel zum Systemträger ausgerichtet sein. Weiter ist bevorzugt, dass eine Schwenkachse des Gelenks zumindest im Wesentlichen rechtwinklig zur Drehachse der Drehkopplung ausgerichtet ist, oder zumindest unter einem Winkel von mindestens 60° hierzu. Durch Verschwenken des Abstreiferelements in dem Gelenk kann bevorzugt eine variable Anlage am Fördergurt erreicht werden; insbesondere bevorzugt ist die Möglichkeit, durch eine Schwenkbewegung in dem Gelenk ein Abschwenken des Abstreiferelements von der Gurtoberfläche zu erreichen, um Hindernisse passieren zu lassen.

Bevorzugt kann ein Federelement vorgesehen sein, um das Abstreiferelement in Richtung des Fördergurts mit einer Anpresskraft zu beaufschlagen. So kann eine federnde Anlage des Abstreiferelements am Fördergurt erreichet werden. Hierfür ist grundsätzlich die Verwendung jeder Art von Federelement möglich, bspw. als Torsionsfeder, Spiralfeder, Zug- oder Druckfeder etc. Besonders bevorzugt ist die Verwendung einer Gummitorsionsfeder, die weiter bevorzugt im Gelenk angeordnet ist.

Gemäß einer vorteilhaften Ausführungsform ist ein Anschlag für die Schwenkbewegung des Abstreiferelements im Gelenk vorgesehen. Hierdurch kann insbesondere die Bewegung des Abstreiferelements in Richtung auf den Fördergurt begrenzt werden. Dabei ist der Anschlag bevorzugt so positioniert, dass in der Anschlagposition noch eine Vorspannung in Richtung der Oberfläche des Fördergurts besteht.

Bevorzugt kann das Abstreiferelement über einen Abstreiferarm mit dem Gelenk verbunden sein, wobei die Drehkopplung an dem Abstreiferarm gebildet ist.

Das erfindungsgemäße Abstreifermodul gemäß Anspruch 13 ist als Teil des beschriebenen Abstreifers vorgesehen und umfasst zumindest das Basiselement, das Abstreiferelement und die Drehkopplung.

Bei Einsatz des Abstreifers an einem erfindungsgemäßen Gurtbandförderer gemäß Anspruch 14 ist der Systemträger quer zum Fördergurt ausgerichtet und das Abstreifelement - bzw. bevorzugt eine Mehrzahl von Abstreifelementen - liegt am Fördergurt an.

Nachfolgend werden Ausführungsformen der Erfindung anhand von Zeichnungen näher beschrieben. Dabei zeigen:
- Fig. 1, 2: perspektivische Ansichten eines Teils eines Gurtbandförderers mit einem Fördergurt und einem Abstreifer gemäß einer ersten Ausführungsform;
- Fig. 1a: eine vergrößerte perspektivische Ansicht einer Halterung aus Fig. 1;
- Fig. 3: eine Seitenansicht des Abstreifers aus Fig. 1, 2;
- Fig. 4, 5: ein Abstreifermodul des Abstreifers aus Fig. 1-3 in Draufsicht sowie in teilweise geschnittener Seitenansicht;
- Fig. 6: einen Querschnitt durch das Abstreifermodul aus Fig. 5 entlang der Linie A..A;
- Fig. 7: eine perspektivische Ansicht des Abstreifermoduls aus Fig. 4, 5 mit gelöstem Abstreiferelement;
- Fig. 8a-8e: perspektivische Ansichten verschiedener Stellungen von Teilen des Abstreifers gemäß der ersten Ausführungsform bei der Entnahme des Systemträgers; und
- Fig. 9a-9c: perspektivische Ansichten des Abstreifers gemäß der ersten Ausführungsform bei der Verwendung einer Ausziehhilfe
- Fig. 10: eine Querschnittsansicht entlang der Line B..B aus Fig. 8b;
- Fig. 11: eine perspektivische Ansicht eines Teils eines Gurtbandförderers mit einem Fördergurt und einem Abstreifer gemäß einer zweiten Ausführungsform;
- Fig. 12: eine Draufsicht auf einen Systemträger des Abstreifers aus Fig. 11;
- Fig. 13: eine Seitenansicht des Abstreifers aus Fig. 11, 12;
- Fig. 14: eine Ansicht analog zu Fig. 10 für den Abstreifer aus Fig. 11 - 13 gemäß der zweiten Ausführungsform.

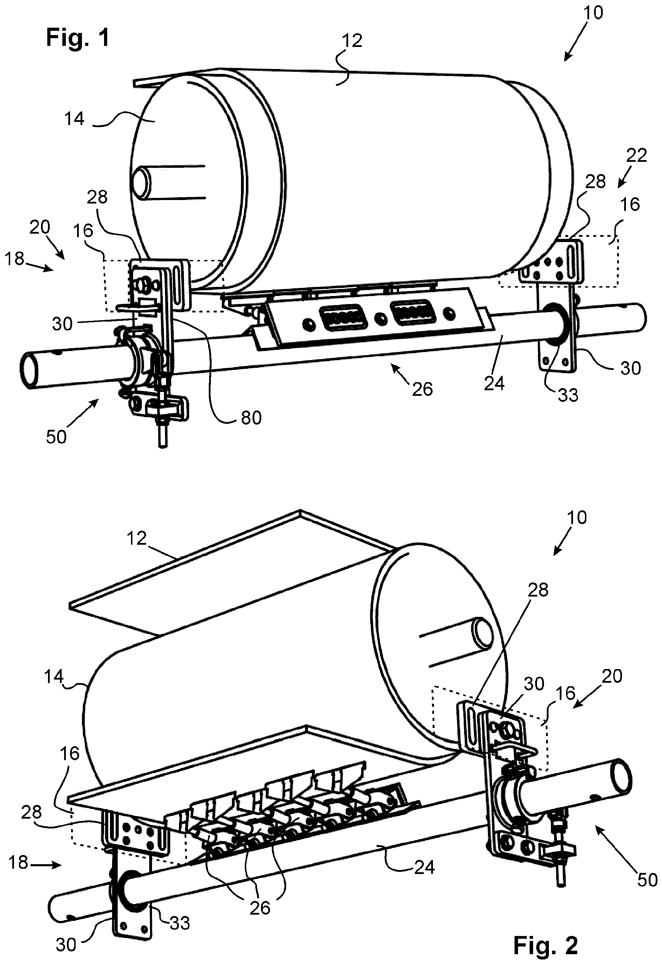

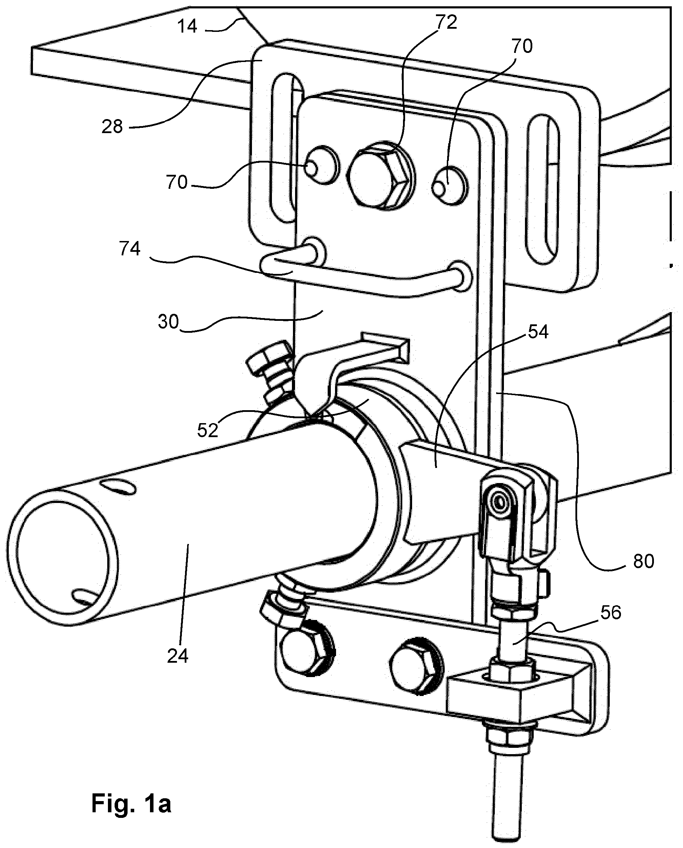

Fig. 1, Fig. 2 zeigen für eine erste Ausführungsform in perspektivischen Ansichten einen Teil eines Gurtbandförderers 10 mit einem Fördergurt 12, der an einer Umlenktrommel 14 umgelenkt ist. Eine Welle der Umlenktrommel ist gelagert an einem Bandgerüst 16, von dem hier nur Teile schematisch dargestellt sind

Am Gurtbandförderer 10 ist ein Abstreifer 18 mit einer Mehrzahl von Abstreifermodulen 26 vorgesehen mit einem Systemträger 24 und einer Halterung 20 und Gegenhalterung 22 zur Anbringung am Bandgerüst 16.

Die Halterung 20 und die Gegenhalterung 22 verfügen jeweils über ein Anbringungsteil, das am Bandgerüst 16 befestigt oder Teil des Bandgerüstes 16 ist, hier jeweils in Form von Anbringungsplatten 28. An den Anbringungsplatten 28 ist jeweils ein Halteelement in Form einer Halteplatte 30 angebracht.

Der Systemträger 24 ist in der gezeigten Ausführungsform ein Rohr von durchgehend rundem Querschnitt. Die Halteplatten 30 weisen jeweils runde Aussparungen mit darin eingesetzten Kunststoff-Gleitbuchsen 33 auf, in denen der Systemträger 24 drehbar gelagert ist.

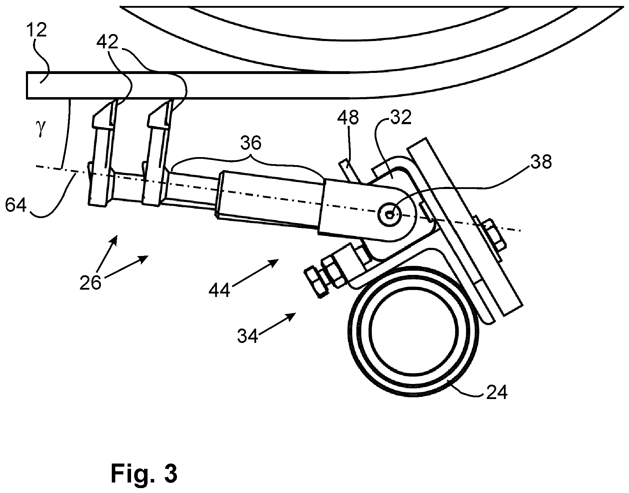

In Fig. 3 sind in einer Seitenansicht zwei Abstreifermodule 26 dargestellt. Die Abstreifermodule 26 umfassen jeweils ein Basiselement 32, das am Systemträger 24 in einer Klemmhalterung 34 lösbar angebracht ist. Am Basiselement 32 ist ein Abstreiferarm 36 um eine Schwenkachse 38 schwenkbar angebracht. Am Ende des Abstreiferarms 36 ist jeweils ein Abstreifelementhalter 40 mit einem Abstreifelement 42 angeordnet.

Wie bspw. aus Fig. 2 ersichtlich ist, sind mehrere Abstreifermodule 26 nebeneinander am Systemträger 24 angeordnet. Der Systemträger 24 erstreckt sich in Richtung der Breite des Fördergurts 12, also quer zu dessen Laufrichtung. Bei der ersten Ausführungsform weisen nebeneinander angeordnete Abstreifermodule 26 jeweils im Wechsel kürzere und längere Abstreiferarme 36 auf, so dass die Abstreiferelemente42 in zwei gestaffelten Reihen angeordnet sind, wobei in Laufrichtung des Fördergurts gesehen stets eine geringfügige Überlappung zwischen den Abstreiferelementen 42 der beiden Reihen gegeben ist. Die Abstreifermodule 26 sind so nebeneinander positioniert, dass sich die Reihen über zumindest im Wesentlichen die gesamte Breite des Fördergurts 12 erstrecken.

Im Betrieb des Gurtbandförderers 10 und des Abstreifers 18 liegen Kanten der Abstreiferelemente 42 wie in Fig. 3 gezeigt schälend auf der Oberfläche des Fördergurts 12 an, im gezeigten Beispiel im Rücklaufbereich des Förderbandes 12. Dabei werden die Abstreiferelemente 42 federnd gegen die Oberfläche des Fördergurts 12 angedrückt. Verschmutzungen und anhaftendes Fördergut werden so durch die Abstreiferelemente 42 vom laufenden Fördergurt 12 abgestreift.

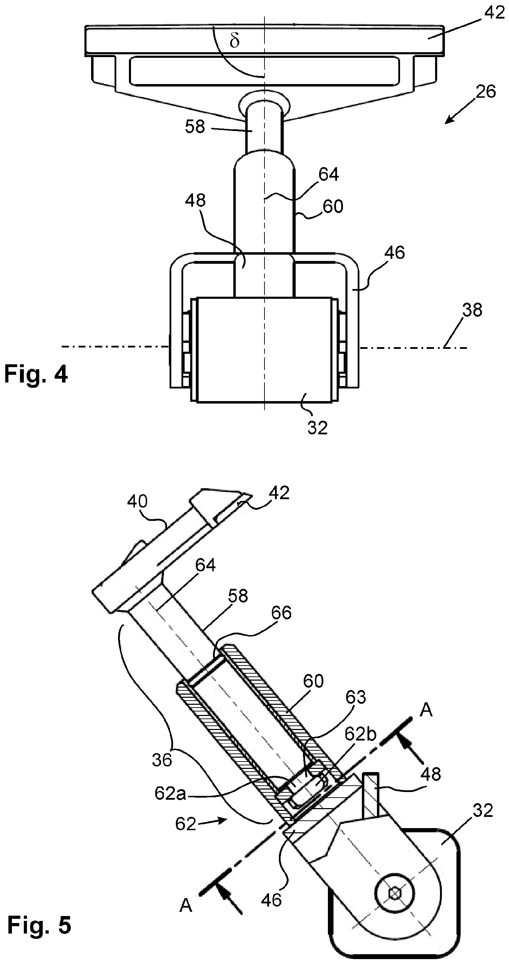

In Fig. 4, 5 ist eines der Abstreifermodule 26 näher dargestellt. Wie dort gezeigt ist zwischen dem Basiselement 32 und dem Abstreiferarm 36 ein Gelenk 44 vorgesehen, so dass der Abstreiferarm 36 um eine Schwenkachse 38 schwenkbar ist. Wie dargestellt umfasst das Gelenk 44 einen das Basiselement 32 umgreifenden Bügel 46.

Im Inneren des Gelenks 44 wirkt eine Gummitorsionsfeder (nicht dargestellt), die den Abstreiferarm 36 mit einem Drehmoment beaufschlagt.

Am Basiselement 32 ist eine hervorstehende Lasche als Anschlag 48 vorgesehen. In einer Anschlagposition liegt ein Teil des Bügels 46 am Anschlag 48 an, so dass der Abstreiferarm 36 nicht weiter um die Schwenkachse 38 verschwenken kann. Die Gummitorsionsfeder ist so ausgebildet, dass sie den Abstreiferarm 36 in Richtung des Anschlags beaufschlagt, wobei in der in Fig. 5 dargestellten Anschlagposition eine Vorspannung 48 der Feder herrscht.

Durch die Wirkung der jeweiligen Federn der Abstreifermodule 26 werden die Abstreiferelemente 42 gegen die Oberfläche des Fördergurts 12 gedrückt, können aber durch Verschwenken in den Gelenken 44 beim Einwirken entsprechender Kräfte im Betrieb, bspw. durch stationäre Gurtschäden, Erhebungen o. ä. auf der Oberfläche des Fördergurts 12 durch eine entsprechende Schwenkbewegung des Abstreiferarms 36 um die Schwenkachse 38 gegen die Wirkung der Feder ausweichen.

Eine Vorspannung des gesamten Abstreifers 18, mit der die Gesamtheit der Abstreiferelemente 42 gegen den Fördergurt 12 gedrückt wird, wird durch Vorgabe einer Drehposition des Systemträgers 24 vorgegeben. An der Halterung 20 ist hierfür zwischen der Halteplatte 30 und dem Systemträger 24 eine Spannvorrichtung 50 vorgesehen.

Fig. 1a zeigt die Halterung 20 in einer vergrößerten Darstellung. Ein am Systemträger 24 angebrachter Klemmring weist einen radial vom Systemträger 24 hervorstehenden Spannarm 54 auf, der mittels einer Spannschraube 56 gegenüber einer fest an der Halteplatte 30 angebrachten Anbringung gespannt werden kann. Durch Verstellung der Spannschraube 56 kann so der Systemträger 24 gedreht und eine Vorspannung der Federn der Abstreifermodule 26 eingestellt werden.

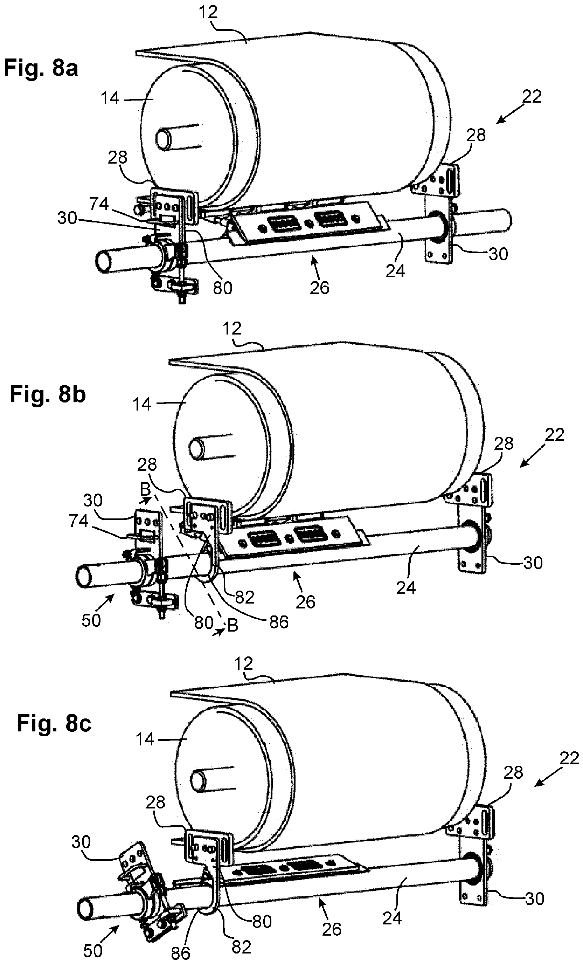

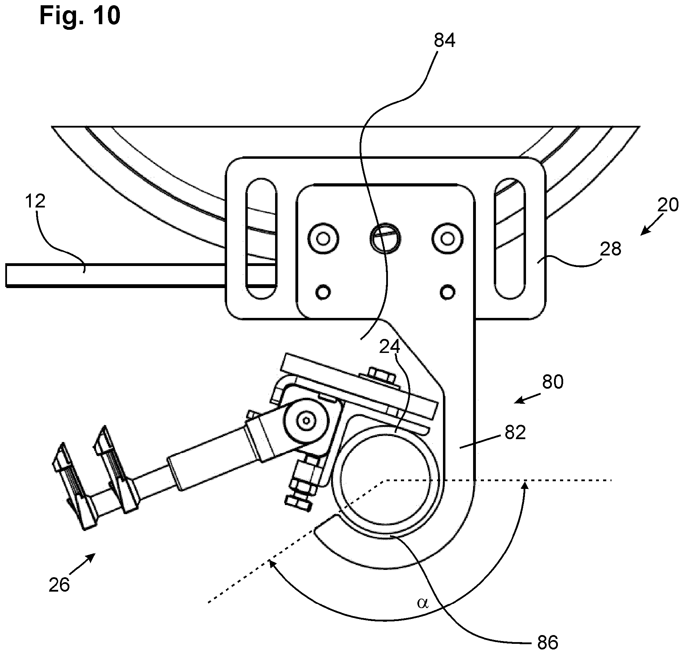

Wie in Fig. 1, 1a weiter gezeigt ist an der Anbringungsplatte 28 der Halterung 20 zudem ein plattenförmiges Stützelement 80 angebracht, das in der gezeigten Ausführung zwischen der Anbringungsplatte 28 und der Halteplatte 30 angeordnet ist. Form und Funktion des Stützelements 80 werden später im Hinblick auf Fig. 8a-8d und Fig. 10 näher erläutert.

Im Betrieb des Abstreifers 18 kommt es zu einem fortwährenden Verschleiß an den Abstreiferelementen 42, so dass eine regelmäßige Inspektion und Wartung erforderlich ist. Der Abstreifer 18 ist hinsichtlich seiner Anbringung am Bandgerüst 16 sowie hinsichtlich der Anbringung der Abstreiferelemente 42 an den Abstreifermodulen 26 für eine besonders einfache Wartung ausgelegt.

Wie insbesondere aus Fig. 4, Fig. 5, Fig. 7 deutlich wird, umfasst der Abstreiferarm 36 zwei Elemente, die lösbar aneinander befestigt sind, nämlich einen am Abstreiferelementhalter 40 angebrachten Schaft 58 und eine mit dem Basiselement 32 verbundene, nämlich am Bügel 46 des Gelenks 44 befestigte Hülse 60. Der Schaft 58 ist in die Hülse 60 eingesteckt (Fig. 5) und mittels einer Drehverriegelung 62 in Richtung einer Längsachse 64 des Abstreiferarms 36 gesichert.

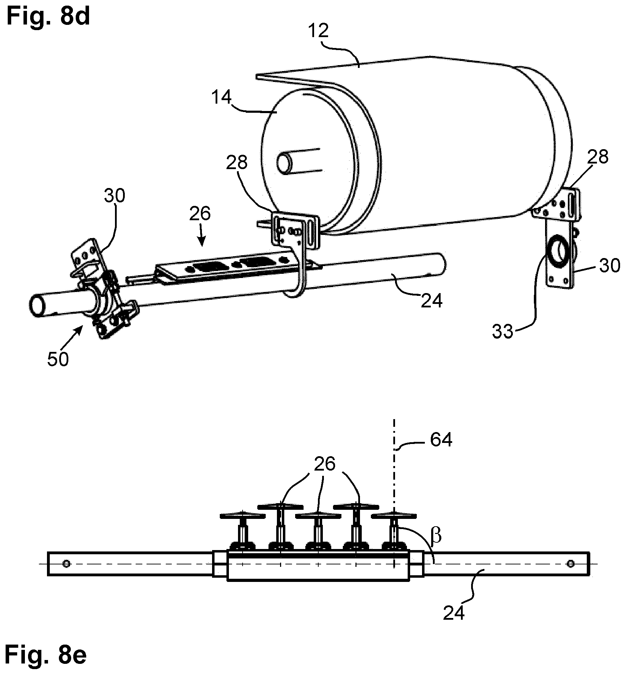

Die Längsachse 64 erstreckt sich in der gezeigten Ausführung wie aus Fig. 2, Fig. 3 ersichtlich ist in einer vertikalen Ansicht parallel zur Laufrichtung des Fördergurts 12 und somit auch rechtwinklig, d.h. unter einem Winkel β von 90° (s. Fig. 8e) zur Längsachse des Systemträgers 24. In einer horizontalen Ansicht von der Seite (Fig. 3) erstreckt sich die Längsachse 64 unter einem Winkel γ von ca. 9° zur Laufrichtung des Fördergurts 12. Weiter ist die Längsachse 64 in der gezeigten Ausführung rechtwinklig, d.h. unter einem Winkel δ von 90° ausgerichtet zur Anlagekante des Abstreifelements 42 (s. Fig. 4).

Der Schaft 58 ist innerhalb der Hülse 60 um die Längsachse 64 frei drehbar, weshalb die Längsachse 64 auch als Drehachse bezeichnet wird. Dabei ist allerdings ein Dichtungsring 66 vorgesehen, der einerseits eine Abdichtung des Innenraums der Hülse 60 gegenüber dem Schaft 58 bewirkt und andererseits durch Reibung aufgrund der Anlage an der Innenseite der Hülse 60 eine gewisse Schwergängigkeit der Bewegung des Schafts 58 gegenüber der Hülse 60 herstellt.

Die Drehverriegelung 62 umfasst auf Seiten der Hülse 60 ein im Inneren angeordnetes längliches Fenster 62a mit einer Berandung, die in das Innere der Hülse 60 hervorsteht und auf Seiten des Schaftes 58 ein längliches, plattenförmiges Eingriffselement 62b, das am Ende des Schaftes 58 an einer Verlängerung 63 mit kleinerem Durchmesser fest angebracht ist.

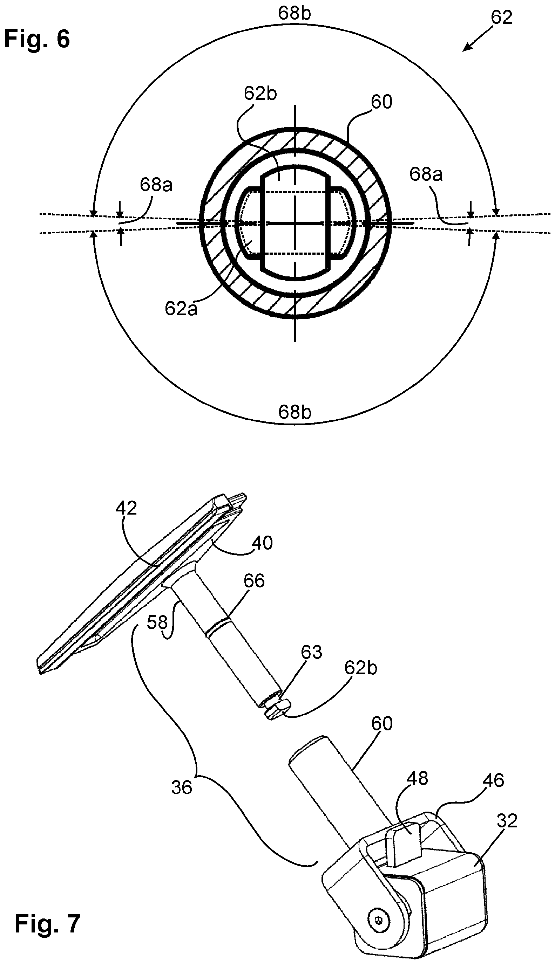

Wie insbesondere aus der Querschnittsansicht in Fig. 6 ersichtlich ist, sind das Eingriffselement 62b und das Fenster 62a so geformt, dass das Eingriffselement 62b bei paralleler Ausrichtung zum Fenster 62a (gestrichelte Darstellung) durch dieses in Richtung der Längsachse 64 hindurch gesteckt werden kann, während es in einer gegenüber der parallelen Ausrichtung verdrehten Lage wie gezeigt (durchgezogene Linie) an der Berandung des Fensters 62a verriegelt ist.

Folglich ergibt sich hinsichtlich der Festlegung des Schaftes 58 an der Hülse 60 in axialer Richtung der Längsachse 64 eine Abhängigkeit von der Drehstellung:
Bei einer Stellung des Eingriffselement 62b parallel zum Fenster 62a (gestrichelte Darstellung) befindet sich der Schaft 58 mit dem daran angebrachten Abstreiferelementhalter 40 und Abstreiferelement 42 in einer Stellung innerhalb eines Freigabewinkelbereiches 68a. Bei einer Drehstellung im Freigabewinkelbereich ist die Drehverriegelung 62 gelöst und der Schaft 58 kann in Längsrichtung gegenüber der Hülse 60 frei verschoben werden.

Bei weiterer Verdrehung des Schaftes 58 gegenüber der Hülse 60 greifen die Enden des Eingriffselements 62b hinter die Umrandung des Fensters 62a, so dass der Schaft 58 in Längsrichtung gegenüber der Hülse 60 festgelegt ist. Die entsprechenden Drehstellungen des Schaftes 58 liegen innerhalb eines Festwinkelbereichs 68b, in dem die Drehverriegelung 62 verriegelt ist.

Wie dargestellt ist der Freigabewinkelbereich 68a dabei zentriert um die in Fig. 6 gestrichelt gezeigte Drehstellung, in der sich die zur Anlage an den Fördergurt 12 vorgesehene vordere Kante des Abstreiferelements 42 unter 90° zur Längsrichtung des Systemträgers 24 sowie zur Schwenkachse 38 des Abstreifermoduls 26 befindet. Der Festwinkelbereich 68b hingegen ist zentriert um eine Drehstellung, die hiergegen um 90° gedreht und in Fig. 6 mit durchgezogenen Linien gezeigt ist. In dieser Drehstellung ist die Kante des Abstreiferelements 42 parallel zur Längsrichtung des Systemträgers 24 sowie zur Schwenkachse 38 des Gelenks 44 ausgerichtet.

Durch die freie Drehbarkeit des Schaftes 58 innerhalb der Hülse 60 kann sich das jeweilige Abstreiferelement 42 bei Anlage an den Fördergurt 12 nach dessen Kontur ausrichten. Dieser wird in der Praxis nicht über die gesamte Gurtbreite stets plan sein, sondern sich z.B. zu den Rändern hin wölben. Durch den Andruck stellen sich die Abstreiferelementhalter 40 stets so, dass die Abstreiferelemente 42 der Form des Fördergurts 12 folgen.

Dabei wird allerdings in keiner Betriebssituation eine Drehposition erreicht, die innerhalb des Freigabewinkelbereiches 68a liegt. So bleibt die Drehverriegelung 62 während der Anlage des Abstreiferelements 42 am Fördergurt 12 stets im Festwinkelbereich und gewährleistet somit die Befestigung am Basiselement 32 der jeweiligen Abstreifermodule 26.

Um Arbeiten am Abstreifer 18 und den Abstreifermodulen 26 zu ermöglichen, insbesondere den Wechsel der Einheit aus Abstreiferelement 42, Abstreiferelementhalter 40 und Schaft 26 zu ermöglichen, kann wie nachfolgend im Hinblick auf Fig. 8a bis 8e erläutert wird der Systemträger 42 mit den daran angebrachten Abstreifermodulen 26 auf besonders einfache Weise gelöst und zur Seite hin entnommen werden.

Hierfür ist auf Seiten der Halterung 20 eine besondere Anbringung der Halteplatte 30 an der Anbringungsplatte 28 vorgesehen und auf Seiten der Gegenhalterung 22 eine Lagerung des Systemträgers 24 in der Lagerbuchse 33 der Halteplatte 30 so, dass dieser in seiner Längsrichtung frei beweglich ist.

Wie in Fig. 1a dargestellt, ist die Halteplatte 30 an der Anbringungsplatte 28 der Halterung 20 festgelegt durch zwei Steckverbindungen 70 und eine Schraubverbindung 72. Die Steckverbindungen 70 sind gebildet durch zwei im Abstand voneinander parallel angeordnete Bolzen an der Anbringungsplatte 28, die passgenau in Bohrungen der Halteplatte 30 aufgenommen sind. Die Steckverbindungen 70 sind lösbar durch Abziehen der Halteplatte 30 von der Anbringungsplatte 28 in Längsrichtung des Systemträgers 24.

Die zwischen den Steckverbindungen 70 gebildete Schraubverbindung 72 umfasst eine parallel zu den Bolzen ausgerichtete Schraube, mit der die Halteplatte 30 an die Anbringungsplatte 28 geschraubt ist.

In einer Betriebsanordnung zum Betrieb des Gurtbandförderers 10 und des Abstreifers 18, wird die Halteplatte 30 mittels der Schraubverbindung 72 an der Anbringungsplatte 28 festgelegt.

Bei Unterbrechung des Betriebs können zu wartende Teile des Abstreifers 18 durch Überführen des Abstreifers 18 in eine Montageanordnung entnommen werden. Durch Lösen der Schraubverbindung 72 kann die Halteplatte 30 von der Anbringungsplatte 28 gelöst werden, indem nachfolgend durch Zug in Richtung der Längsachse des Systemträgers 24 auch die Steckverbindungen 70a, 70b gelöst werden. Hierfür ist ein Griff 74 vorgesehen.

Fig. 8a zeigt ausgehend von der Betriebsanordnung zunächst das Lösen der Schraubverbindung 72. Nachfolgend wird die Halteplatte 30 zusammen mit dem Systemträger 24 in dessen Längsrichtung von der Anbringungsplatte 28 abgezogen, wobei sich die Steckverbindungen 70a, 70b lösen.

Wie bereits erwähnt umfasst die Halterung 20 zwischen der Anbringungsplatte 28 und der Halteplatte 30 das Stützelement 80. Das Stützelements 80 weist wie aus Fig. 8b ersichtlich einen sich in Richtung des Systemträgers 24 erstreckenden und diesen teilweise umgreifenden hakenförmigen Halteabschnitt 82 auf, der eine Vertiefung 86 ausbildet. Der Halteabschnitt 82 und die Vertiefung 86 haben wie gezeigt eine der (in diesem Fall runden) Außenkontur des Systemträgers 24 entsprechende, (in diesem Fall runde) abschnittsweise Innenkontur.. Der Halteabschnitt 82 ist in der Betriebsanordnung, d. h. wenn die Halteplatte 30 an der Anbringungsplatte 28 befestigt ist, so angeordnet, dass er den Systemträger 24 nicht berührt, sondern in einem gewissen Abstand von wenigen Millimetern hiervon verbleibt. Oberhalb des Halteabschnitts 82 weist das Stützelement 80 einen Ausschnitt 84 auf, durch den der Systemträger 24 verläuft.

In der Montageanordnung, d.h. nach dem Lösen der Schraubverbindung 72 sowie der Steckverbindungen 70a, 70b (Fig. 8b) sinkt der Systemträger 24 geringfügig ab und liegt danach auf dem Halteabschnitt 82 des Stützelements 80 in der Vertiefung 86 auf. Nach Lösen der Verbindung zwischen der Halteplatte 30 und der Anbringungsplatte 28 übernimmt somit das Stützelement 80 das Halten des Systemträgers 24. Wie dargestellt ist das Stützelement 80 an der Halteplatte 28 und somit am Bandgerüst 16 befestigt. Wie in Fig. 10 dargestellt umfasst der Halteabschnitt 82 an der Vertiefung 86 den Systemträger 24 über einen Umfangsbereich α von ca. 135° und unterstützt dabei den Systemträger 24 von unten so, dass dieser nicht herabfällt.

Im weiteren Verlauf wird nun der Systemträger 24 in Richtung seiner Längsachse zusammen mit der Halteplatte 30 und der Spannvorrichtung 50 herausgezogen (Fig. 8b). Dabei unterstützt das Stützelement 82 den Systemträger 24, so dass dieser nicht herunterfällt. Durch die Verschiebbarkeit des Systemträgers 24 in der Lagerbuchse 33 der Gegenhalterung 22 ist ein besonders leichtes Herausziehen ermöglicht.

Dabei können die Abstreifermodule 26 die Anbringungsplatte 28 und das Stützelement 80 passieren, da die hakenförmige, den Systemträger 24 nur teilweise umgreifende Form des Halteabschnitts 82 mit dem Ausschnitt 84 ausreichend Freiraum lässt, so dass beim Herausziehen des Systemträgers 24 die Abstreifermodule 26 in eine Auszugstellung außerhalb des Gurtbereichs überführt werden können (Fig. 8d). Die Abstreifermodule 26 können so durch einen freien Bereich in der Ebene des Stützelements 80 sowie der Anbringungsplatte 28 hindurchgeführt werden, ohne anzuschlagen. Teil des freien Bereiches bildet dabei der Ausschnitt 84 des Stützelements 80.

In der Auszugstellung sind die Abstreifermodule 26 gut zugänglich und können inspiziert sowie gewartet werden. Insbesondere können verschlissene Abstreiferelemente 42 ersetzt werden, indem die j eweiligen Einheiten aus Abstreiferelement 42, Abstreiferelementhalter 40 und Schaft 58 des jeweiligen Abstreifermoduls wie oben beschrieben durch Verdrehung um die Drehachse 64 gelöst und durch Abziehen in Längsrichtung getrennt werden sowie nachfolgend neue Elemente in gleicher Weise angebracht werden.

Inspektion und Wartung des Abstreifers 18 ist somit besonders erleichtert. In der gezeigten Ausführungsform kann durch Lösen einer einzigen Schraube (Schraubverbindung 72) ermöglicht werden, den Systemträger 24 mitsamt der Abstreifermodule 26 seitlich herauszuziehen. Durch die Unterstützung mittels des Stützelements 80 kann dies durch eine einzelne Person durchgeführt werden.

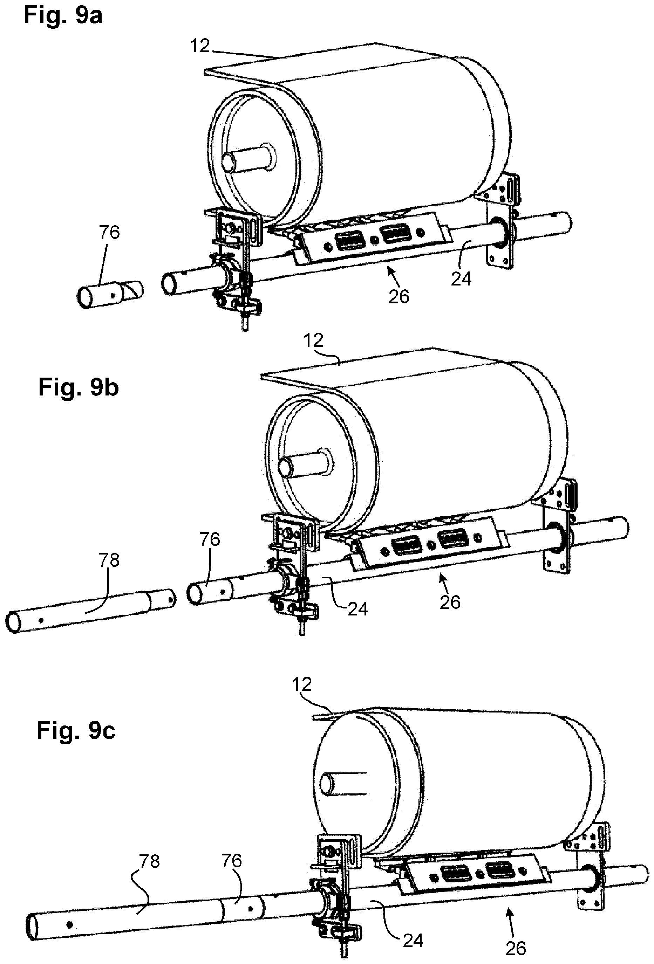

Steht seitlich des Fördergurts 12 ausreichend Platz zur Verfügung, kann die Handhabung des Systemträgers 24 beim Herausziehen noch weiter erleichtert werden, indem eine Ausziehhilfe verwendet wird. Hierzu kann, wie in Fig. 9a gezeigt, zunächst ein Adapter 76 seitlich auf den Systemträger 24 aufgesteckt und an diesem verklemmt bzw. anderweitig festgelegt werden. An den Adapter 76 kann anschließend ein Rohr angebracht werden, das als Ausziehhilfe 78 dient und in Verlängerung des Systemträgers 24 angebracht wird. Mittels der Ausziehhilfe 78 kann der Systemträger 24 besonders gut gehandhabt werden, insbesondere in Verbindung mit der Auflage am Halteabschnitt 82 des Stützelements 80.

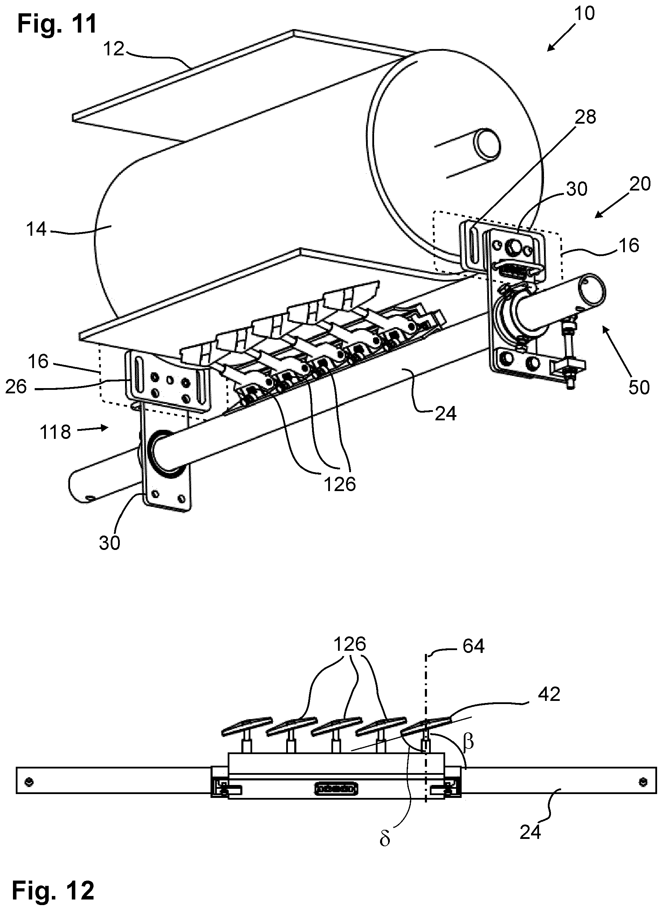

In Fig. 11 - 14 ist ein Abstreifer 118 gemäß einer zweiten Ausführungsform gezeigt. Der Abstreifer 118 gemäß der zweiten Ausführungsform stimmt in zahlreichen Details mit dem Abstreifer 18 gemäß der ersten Ausführungsform überein, so dass nachfolgend nur die Unterschiede näher erläutert werden und im Übrigen auf die vorstehende Beschreibung verwiesen wird. Gleiche Bezugszeichen bezeichnen zwischen den Ausführungsformen übereinstimmende Elemente.

Während beim Abstreifer 18 gemäß der ersten Ausführungsform wie beschrieben und dargestellt die Abstreifelemente 42 zweireihig angeordnet sind, umfasst der Abstreifer 118 gemäß der zweiten Ausführungsform eine einreihige Anordnung von Abstreifelementen 42 an jeweils gleich langen Abstreifermodulen 126, die nebeneinander auf dem Systemträger 24 angeordnet sind.

Wie besonders aus Fig. 12 ersichtlich ist, sind die Abstreifkanten der Abstreiferelemente 42 nicht wie bei der ersten Ausführungsform in Querrichtung des Fördergurts 12 ausgerichtet, sondern schräg dazu unter einem Winkel, der im dargestellten Beispiel ca. 15° beträgt. Die Abstreiferarme 36 erstrecken sich mit ihrer Längsachse 64 aber wie bei der ersten Ausführungsform in Längsrichtung des Fördergurts 12, d.h. wie bei der ersten Ausführungsform unter einem Winkel von β von 90°.

An den Abstreiferarmen 36 sind die Abstreiferelemente 42 schräg unter einem Winkel δ von ca. 75° angebracht. Dabei sind benachbarte Abstreifermodule 126 auf dem Systemträger 24 so eng angeordnet, dass sich - in Längsrichtung des Fördergurts 12 gesehen - eine geringe Überlappung der Abstreiferelemente 42 und so über die gesamte Gurtbreite eine Abstreifwirkung ergibt.

Im Übrigen stimmt der Abstreifer 118 gemäß der zweiten Ausführungsform in Aufbau und Funktion mit dem Abstreifer 18 gemäß der ersten Ausführungsform überein, d.h. ebenso wie beim Abstreifer 18 umfasst jeder Abstreifer 118 das Basiselement 32, das am Systemträger 24 in der Klemmhalterung 34 lösbar angebracht ist sowie den Abstreiferarm 36, der um eine Schwenkachse 38 schwenkbar angebracht ist und an dessen Ende jeweils ein Abstreifelementhalter 40 mit einem Abstreifelement 42 angeordnet ist. Die vorgespannte Torsionsfeder prägt ein Drehmoment auf, so dass im Betrieb des Abstreifers 118 die Abstreifkanten der Abstreiferelemente 42 schälend auf der Oberfläche des Fördergurts 12 anliegen und federnd gegen dessen Oberfläche 12 angedrückt werden um Verschmutzungen abzustreifen. Bei stationären Hindernissen auf der Oberfläche des Fördergurts 12 können die Abstreifelemente 42 durch eine Schwenkbewegung des Abstreiferarms 36 um die Schwenkachse 38 gegen die Wirkung der Feder ausweichen.

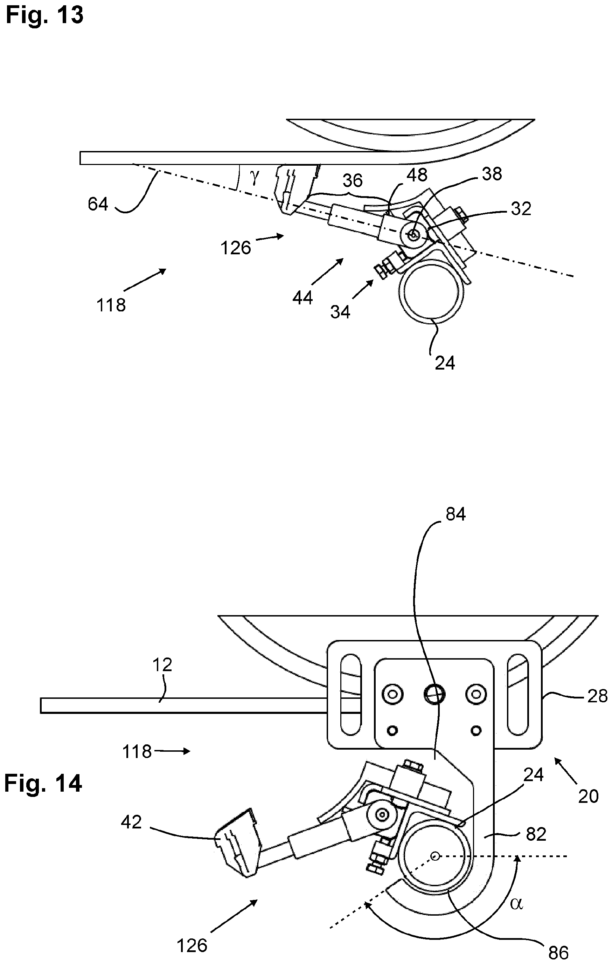

Fig. 13 zeigt für die zweite Ausführungsform eine horizontale Ansicht von der Seite, in der der Winkel γ zwischen der Laufrichtung des Fördergurts 12 und der Längsachse 64 zu entnehmen ist. Der Winkel γ kann je nach Anordnung und Einstellung bspw. zwischen o° und 20° betragen; in der gezeigten Ausführung beträgt der Winkel γ ca. 15°.

Auch bei der zweiten Ausführungsform umfasst der Abstreiferarm 36 den am Abstreiferelementhalter 40 angebrachten Schaft 58, der in der Hülse 60 eingesteckt und um die Längsachse 64 darin drehbar ist. Mittels der Drehverriegelung 62 ist sichergestellt, dass der Schaft 58 nur bei entsprechender Ausrichtung, d.h. Drehung aus der durch die Gurtanlage definierten Normalposition aus der Hülse 60 herausgezogen bzw. in diese eingesteckt werden kann.

## Patentansprüche

1. Abstreifer für einen Fördergurt (12), mit
- einem Systemträger (24) mit mindestens einem Abstreifermodul (26, 126),
- wobei das Abstreifermodul (26, 126) ein am Systemträger (24) angeordnetes Basiselement (32) und ein Abstreiferelement (42) zur Anlage an den Fördergurt (12) aufweist,
- wobei das Abstreiferelement (42) mit einer Drehkopplung gegenüber dem Basiselement (32) um eine Drehachse (64) drehbar angebracht ist, wobei die Drehkopplung so ausgebildet ist, dass
- in einer Drehstellung des Abstreiferelements (42) innerhalb eines Festwinkelbereichs (68b) das Abstreiferelement (42) in Richtung der Drehachse (64) fest am Basiselement (32) angekoppelt ist,
- und in einer Drehstellung des Abstreiferelements (42) innerhalb eines Freigabewinkelbereichs (68a) das Abstreiferelement (42) in Richtung der Drehachse (64) vom Basiselement (32) lösbar ist.

2. Abstreifer gemäß Anspruch 1, bei dem
- die Drehkopplung eine Einstecköffnung (62a) und ein Eingriffselement (62b) aufweist, die so ausgebildet sind, dass das Eingriffselement (62b) in einer Drehstellung innerhalb des Freigabewinkelbereichs (68a) durch die Einstecköffnung (62a) hindurchführbar und das Eingriffselement (62b) in einer Drehstellung innerhalb des Festwinkelbereichs (68b) an der Einstecköffnung (62a) verriegelt ist.

3. Abstreifer gemäß Anspruch 2, bei dem
- das Eingriffselement (62b) an einem Schaft (58) angeordnet ist, der in eine Einsteckhülse (60) einsteckbar ist, wobei die Einstecköffnung (62a) innerhalb der Einsteckhülse (60) gebildet ist,
- wobei eine Berandung der Einstecköffnung (62a) nach Innen in die Einsteckhülse (60) vorstehend ausgebildet ist.

4. Abstreifer gemäß Anspruch 3, bei dem
- der Schaft (58) oder die Einsteckhülse (60) fest mit dem Abstreiferelement (42) verbunden ist.

5. Abstreifer gemäß einem der vorangehenden Ansprüche, bei dem
- die Drehachse (64) gegenüber dem Systemträger (24) einen Winkel (β) von mehr als 60° aufweist, bevorzugt zumindest im Wesentlichen rechtwinklig angeordnet ist.

6. Abstreifer gemäß einem der vorangehenden Ansprüche, bei dem
- der Festwinkelbereich (68b) sich ausgehend von einer Mittelstellung mindestens über +/- 30° erstreckt.

7. Abstreifer gemäß einem der vorangehenden Ansprüche, bei dem
- die Drehkopplung einen Schaft (58) aufweist, der in eine Einsteckhülse (60) einsteckbar ist,
- wobei ein Reibelement (66) zur Anlage an den Schaft (58) und/oder eine Innenseite der Einsteckhülse (60) vorgesehen ist, um eine Relativbewegung zwischen Schaft (58) und Einsteckhülse (60) gegeneinander zu dämpfen.

8. Abstreifer gemäß einem der vorangehenden Ansprüche, bei dem
- die Drehkopplung einen Schaft (58) aufweist, der in eine Einsteckhülse (60) einsteckbar ist,
- wobei ein Dichtungselement (66) zur Abdichtung zwischen dem Schaft (58) und einer Innenseite der Einsteckhülse (60) vorgesehen ist.

9. Abstreifer gemäß einem der vorangehenden Ansprüche, bei dem
- das Abstreifermodul (26, 126) ein Gelenk (44) aufweist, wobei das Abstreiferelement (42) in dem Gelenk (44) gegenüber dem Systemträger (24) schwenkbar ist.

10. Abstreifer gemäß Anspruch 9, bei dem
- ein Federelement vorgesehen ist, um das Abstreiferelement (42) in Richtung des Fördergurts (12) zu beaufschlagen.

11. Abstreifer gemäß Anspruch 9 oder 10, bei dem
- das Abstreiferelement (42) über einen Abstreiferarm (36) mit dem Gelenk (44) verbunden ist,
- wobei die Drehkopplung an dem Abstreiferarm (36) gebildet ist.

12. Abstreifer gemäß einem der Ansprüche 9 bis 11, bei dem
- ein Anschlag (48) für die Schwenkbewegung des Abstreiferelements (42) vorgesehen ist.

13. Abstreifermodul (26, 126) für einen Abstreifer (18, 118) nach einem der vorangehenden Ansprüche, mit
- einem Basiselement (32) und einem Abstreiferelement (42), wobei das Abstreiferelement (42) mit einer Drehkopplung gegenüber dem Basiselement (32) um eine Drehachse (64) drehbar angebracht ist,
- wobei die Drehkopplung so ausgebildet ist, dass
- in einer Drehstellung des Abstreiferelements (42) innerhalb eines Festwinkelbereichs (68b) das Abstreiferelement (42) bzgl. einer Bewegung in Richtung der Drehachse (64) fest am Basiselement (32) angekoppelt ist,
- und in einer Drehstellung des Abstreiferelements (42) innerhalb eines Freigabewinkelbereichs (68a) das Abstreiferelement (42) in Richtung der Drehachse (64) vom Basiselement (32) lösbar ist.

14. Gurtbandförderer (10), mit
- einem Fördergurt (12),
- und einem Abstreifer (18, 118) nach einem der Ansprüche 1 bis 12,
- wobei der Systemträger (24) quer zum Fördergurt (12) ausgerichtet ist
- und das Abstreiferelement (42) am Fördergurt (12) anliegt.

15. Verfahren zum Wechseln eines Abstreiferelements (42) an einem Abstreifer (18, 118) nach einem der Ansprüche 1 bis 12 oder an einem Gurtbandförderer (10) nach Anspruch 14, bei dem
- der Systemträger (24) in eine Position gebracht wird, in der das Abstreiferelement (42) einen ausreichenden Abstand vom Fördergurt (12) hat, so dass es in eine Drehstellung innerhalb des Freigabewinkelbereichs (68a) drehbar ist,
- das Abstreiferelement (42) vom Basiselement (32) gelöst wird,
- ein neues Abstreiferelement (42) in einer Drehstellung innerhalb des Freigabewinkelbereichs (68a) positioniert am Basiselement (32) angebracht und in eine Drehstellung innerhalb des Festwinkelbereichs (68b) gedreht wird.

## Claims

1. A scraper for a conveyor belt (12), having
- a system carrier (24) with at least one scraper module (26, 126),
- wherein the scraper module (26, 126) has a base element (32) arranged on the system carrier (24) and a scraper element (42) for abutting against the conveyor belt (12),
- wherein the scraper element (42) is rotatably attached with a rotational coupling about a rotational axis (64) with respect to the base element (32), wherein the rotational coupling is configured such that,
- in a rotational position of the scraper element (42) within a fixed angular range (68b), the scraper element (42) is firmly coupled to the base element (32) in the direction of the rotational axis (64),
- and in a rotational position of the scraper element (42) within a release angular range (68a), the scraper element (42) can be detached from the base element (32) in the direction of the rotational axis (64).

2. The scraper according to Claim 1, in which
- the rotational coupling has an insertion opening (62a) and an engagement element (62b) which are configured such that the engagement element (62b) in a rotational position within the release angular range (68a) can be guided through the insertion opening (62a) and the engagement element (62b) is locked to the insertion opening (62a) in a rotational position within the fixed angular range (68b).

3. The scraper according to Claim 2, in which
- the engagement element (62b) is arranged on a shaft (58) which can be inserted into an insertion sleeve (60), wherein the insertion opening (62a) is formed within the insertion sleeve (60),
- wherein a rim of the insertion opening (62a) is configured projecting inwardly into the insertion sleeve (60).

4. The scraper according to Claim 3, in which
- the shaft (58) or the insertion sleeve (60) is firmly connected to the scraper element (42).

5. The scraper according to one of the preceding claims, in which
- the rotational axis (64) has an angle (β) of more than 60° with respect to the system carrier (24), is preferably arranged at least substantially perpendicular.

6. The scraper according to one of the preceding claims, in which
- the fixed angular range (68b) extends, starting from a middle position, at least over +/- 30°.

7. The scraper according to one of the preceding claims, in which
- the rotational coupling has a shaft (58) which can be inserted into an insertion sleeve (60),
- wherein a friction element (66) for abutment against the shaft (58) and/or an inside of the insertion sleeve (60) is provided in order to dampen a relative movement between the shaft (58) and insertion sleeve (60) against one another.

8. The scraper according to one of the preceding claims, in which
- the rotational coupling has a shaft (58) which can be inserted into an insertion sleeve (60),
- wherein a sealing element (66) is provided for sealing between the shaft (58) and an inside of the insertion sleeve (60).

9. The scraper according to one of the preceding claims, in which
- the scraper module (26, 126) has a joint (44), wherein the scraper element (42) can be pivoted in the joint (44) with respect to the system carrier (24).

10. The scraper according to Claim 9, in which
- a spring element is provided in order to act upon the scraper element (42) in the direction of the conveyor belt (12).

11. The scraper according to Claim 9 or 10, in which
- the scraper element (42) is connected via a scraper arm (36) to the joint (44),
- wherein the rotational coupling is formed on the scraper arm (36).

12. The scraper according to one of Claims 9 to 11, in which
- a stop (48) is provided for the pivot movement of the scraper element (42).

13. A scraper module (26, 126) for a scraper (18, 118) according to one of the preceding claims, having
- a base element (32) and a scraper element (42), wherein the scraper element (42) is rotatably attached with a rotational coupling about a rotational axis (64) with respect to the base element (32),
- wherein the rotational coupling is configured such that
- in a rotational position of the scraper element (42) within a fixed angular range (68b), the scraper element (42) is firmly coupled to the base element (32) with respect to a movement in the direction of the rotational axis (64),
- and in a rotational position of the scraper element (42) within a release angular range (68a), the scraper element (42) can be detached from the base element (32) in the direction of the rotational axis (64).

14. A belt conveyor (10), having
- a conveyor belt (12),
- and a scraper (18, 118) according to one of Claims 1 to 12,
- wherein the system carrier (24) is aligned transversely to the conveyor belt (12)
- and the scraper element (42) abuts against the conveyor belt (12).

15. A method for exchanging a scraper element (42) on a scraper (18, 118) according to one of Claims 1 to 12 or on a belt conveyor (10) according to Claim 14, in which
- the system carrier (24) is brought into a position in which the scraper element (42) is a sufficient distance from the conveyor belt (12) such that it can be rotated into a rotational position within the release angular range (68a),
- the scraper element (42) is detached from the base element (32),
- a new scraper element (42), positioned in a rotational position within the release angular range (68a), is attached to the base element (32) and is rotated into a rotational position within the fixed angular range (68b).

## Revendications

1. Un racleur pour une bande transporteuse (12), comportant
- un support de système (24) avec au moins un module de raclage (26, 126),
- dans lequel le module de raclage (26, 126) comporte un élément de base (32) disposé sur le support de système (24) et un élément de raclage (42) destiné à venir en butée contre la bande transporteuse (12),
- dans lequel l'élément de raclage (42) est fixé de manière rotative avec un accouplement rotatif autour d'un axe de rotation (64) par rapport à l'élément de base (32), dans lequel l'accouplement rotatif est configuré de telle sorte que,
- dans une position de rotation de l'élément de raclage (42) dans une plage angulaire fixe (68b), l'élément de raclage (42) est fermement couplé à l'élément de base (32) dans la direction de l'axe de rotation (64),
- et dans une position de rotation de l'élément de raclage (42) dans une plage angulaire de libération (68a), l'élément de raclage (42) peut être détaché de l'élément de base (32) dans la direction de l'axe de rotation (64) .

2. Racleur selon la revendication 1, dans lequel
- le accouplement rotatif comporte une ouverture d'insertion (62a) et un élément d'engagement (62b) qui sont configurés de telle sorte que l'élément d'engagement (62b), dans une position de rotation à l'intérieur de la plage angulaire de libération (68a), peut être guidé à travers l'ouverture d'insertion (62a) et que l'élément d'engagement (62b) est verrouillé à l'ouverture d'insertion (62a) dans une position de rotation à l'intérieur de la plage angulaire fixe (68b).

3. Racleur selon la revendication 2, dans lequel
- l'élément d'engagement (62b) est disposé sur un arbre (58) qui peut être inséré dans une douille d'insertion (60), l'ouverture d'insertion (62a) étant formée à l'intérieur de la douille d'insertion (60),
- dans lequel un bord de l'ouverture d'insertion (62a) est configuré pour faire saillie vers l'intérieur de la douille d'insertion (60).

4. Racleur selon la revendication 3, dans lequel
- l'arbre (58) ou la douille d'insertion (60) est fermement relié à l'élément de raclage (42).

5. Le racleur selon l'une des revendications précédentes, dans lequel
- l'axe de rotation (64) a un angle (β) de plus de 60° par rapport au support de système (24), il est de préférence disposé au moins sensiblement perpendiculairement.

6. Le racleur selon l'une des revendications précédentes, dans lequel
- la plage angulaire fixe (68b) s'étend, à partir d'une position médiane, sur au moins +/- 30°.

7. Le racleur selon l'une des revendications précédentes, dans lequel
- l'accouplement rotatif comporte un arbre (58) qui peut être inséré dans une douille d'insertion (60),
- dans lequel un élément de friction (66) destiné à venir en butée contre l'arbre (58) et/ou l'intérieur de la douille d'insertion (60) est prévu pour amortir un mouvement relatif entre l'arbre (58) et la douille d'insertion (60) l'un par rapport à l'autre.

8. Le racleur selon l'une des revendications précédentes, dans lequel
- l'accouplement rotatif comporte un arbre (58) qui peut être inséré dans une douille d'insertion (60),
- dans lequel un élément d'étanchéité (66) est prévu pour assurer l'étanchéité entre l'arbre (58) et l'intérieur de la douille d'insertion (60).

9. Le racleur selon l'une des revendications précédentes, dans lequel
- le module de raclage (26, 126) comporte une articulation (44), dans laquelle l'élément de raclage (42) peut pivoter dans l'articulation (44) par rapport au support de système (24).

10. Racleur selon la revendication 9, dans lequel
- un élément ressort est prévu pour agir sur l'élément de raclage (42) en direction de la bande transporteuse (12) .

11. Racleur selon la revendication 9 ou 10, dans lequel
- l'élément de raclage (42) est relié à l'articulation (44) par l'intermédiaire d'un bras racleur (36),
- dans lequel l'accouplement rotatif est formé sur le bras racleur (36).

12. Le racleur selon l'une des revendications 9 à 11, dans lequel
- une butée (48) est prévue pour le mouvement de pivotement de l'élément de raclage (42).

13. Module de raclage (26, 126) pour un racleur (18, 118) selon l'une des revendications précédentes, comportant
- un élément de base (32) et un élément de raclage (42), dans lequel l'élément de raclage (42) est fixé de manière rotative par un accouplement rotatif autour d'un axe de rotation (64) par rapport à l'élément de base (32),
- dans lequel l'accouplement rotatif est configuré de telle sorte que
- dans une position de rotation de l'élément de raclage (42) dans une plage angulaire fixe (68b), l'élément de raclage (42) est fermement couplé à l'élément de base (32) par rapport à un mouvement dans la direction de l'axe de rotation (64),
- et dans une position de rotation de l'élément de raclage (42) dans une plage angulaire de libération (68a), l'élément de raclage (42) peut être détaché de l'élément de base (32) dans la direction de l'axe de rotation (64).

14. Convoyeur à bande (10), comportant
- une bande transporteuse (12),
- et un racleur (18, 118) selon l'une des revendications 1 à 12,
- dans lequel le support de système (24) est aligné transversalement à la bande transporteuse (12)
- et l'élément de raclage (42) vient en butée contre la bande transporteuse (12).

15. Procédé de remplacement d'un élément de raclage (42) sur un racleur (18, 118) selon l'une des revendications 1 à 12 ou sur un convoyeur à bande (10) selon la revendication 14, dans lequel
- le support de système (24) est amené dans une position dans laquelle l'élément de raclage (42) est à une distance suffisante de la bande transporteuse (12) pour qu'il puisse être tourné dans une position de rotation dans la plage angulaire de libération (68a),
- l'élément de raclage (42) est détaché de l'élément de base (32),
- un nouvel élément de raclage (42), placé dans une position de rotation à l'intérieur de la plage angulaire de libération (68a), est fixé à l'élément de base (32) et est tourné dans une position de rotation à l'intérieur de la plage angulaire fixe (68b).
